# EUROPEAN PATENT APPLICATION

(11) **EP 1 059 055 A1**
(43) Date of publication of application: **13.12.2000**
(21) Application number: 00111817.3
(22) Date of filing: 06.06.2000
(51) Int. Cl.: A47J 31/40

(54) **Working assembly for automatic machines for preparing infusions such as coffee or the like**

(30) Priority: 09.06.1999 IT MI991282
(71) Applicant: Macco S.p.A., 24100 Bergamo (IT)
(72) Inventor: Boffelli, Maurizio, 24010 Botta di Sedrina (Prov. Bergamo) (IT)
(74) Representative: Modiano, Guido, Dr.-Ing.

(57) **Abstract**

A working assembly for automatic machines for preparing infusions such as coffee or the like, comprising a structure (2) which supports a central infusion block (3), in which there is a substantially cylindrical infusion chamber (4) having a vertical axis and being open at its ends, and two mutually opposite pistons (5, 6), respectively an upper piston (5) and a lower piston (6), which are arranged coaxially to the infusion chamber (4), each piston facing one of the ends of the infusion chamber (4). The pistons (5, 6) can be inserted at least partially in the infusion chamber (4), and means (11, 30) are provided for actuating the pistons (5, 6) along their axis in order to open or close the infusion chamber (4) and/or press the infusion material introduced in the infusion chamber (4) and/or extract the residue of the infusion material from the infusion chamber (4) at the end of the infusion process.

## Description

The present invention relates to a working assembly for automatic machines for preparing infusions such as coffee or the like.

Working assemblies for automatic machines for preparing infusions such as coffee or the like are known. Said working assemblies are generally diversified according to the type of coffee to be prepared with the automatic machine. For preparing an espresso coffee, the working assemblies are in fact provided so as to compress a preset amount of ground coffee inside an infusion chamber which is then fed with pressurized water which, by passing through the pressed coffee, produces the infusion, which is discharged outside the infusion chamber.

For preparing a Swiss-style espresso coffee (known as "Schummli"), the working assemblies used are different; the working assemblies used to prepare the coffee consumed in northern Europe or in the United States, also known as fresh-brew and requiring a reduced pressure of the water used to obtain the infusion, are likewise different.

This differentiation of the working assemblies significantly affects production costs.

The aim of the present invention is to solve the above problem, by providing a working assembly for automatic machines for preparing infusions such as coffee or the like which can be used, with slight modifications, to prepare a wide range of infusions.

Within the scope of this aim, an object of the invention is to provide a working assembly which, while being highly versatile in use, is constituted by a very small number of mutually different components, so as to considerably reduce the production costs of the entire working assembly.

A further object of the invention is to provide a working assembly which is highly reliable in operation.

A further object of the invention is to provide a working assembly ensuring optimum compression of the material used to produce the infusion, particularly coffee, even in the presence of limited amounts of said material, so as to always obtain an infusion of excellent quality.

These and other objects which will become better apparent hereinafter are achieved by a working assembly for automatic machines for preparing infusions such as coffee or the like, characterized in that it comprises a structure supporting a central infusion block, in which there is a substantially cylindrical infusion chamber having a vertical axis and being open at its ends, and two mutually opposite pistons, respectively an upper piston and a lower piston, which are arranged coaxially to said infusion chamber, each piston facing one of the ends of said infusion chamber and being at least partially insertable in said infusion chamber, means being provided for actuating said pistons along their axis in order to open or close said infusion chamber and/or press the infusion material introduced in said infusion chamber and/or extract the residue of the infusion material from said infusion chamber at the end of the infusion process.

Further characteristics and advantages of the invention will become better apparent from the description of a preferred but not exclusive embodiment of the working assembly according to the invention, illustrated only by way of non-limitative example in the accompanying drawings, wherein:

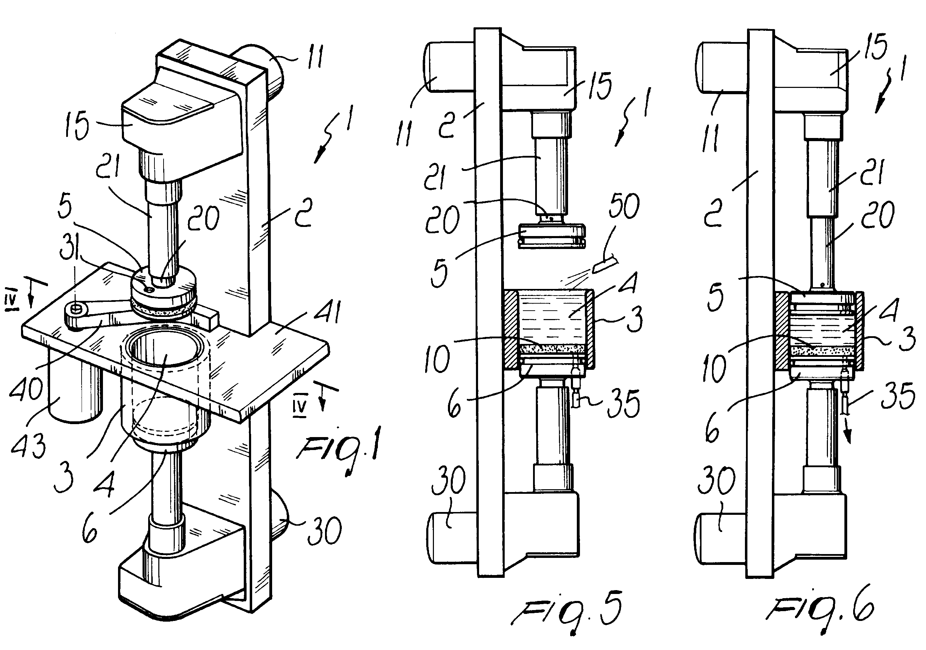

Figure 1 is a perspective view of the working assembly according to the invention;

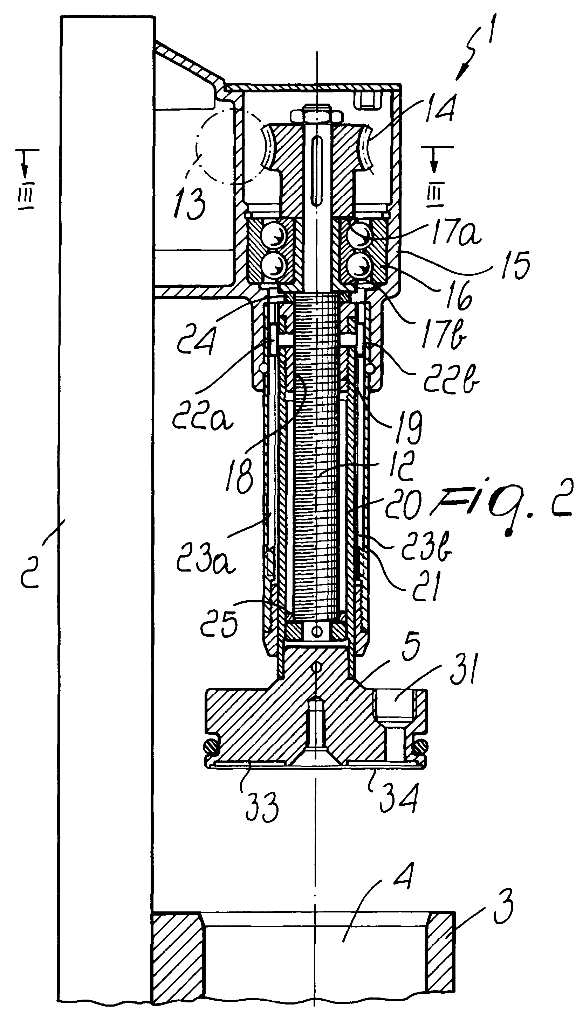

Figure 2 is a partially sectional lateral elevation view of the upper part of the working assembly, taken along a line which passes through the axis of the upper piston;
Figure 3 is a sectional view of Figure 2, taken along the line III-III;

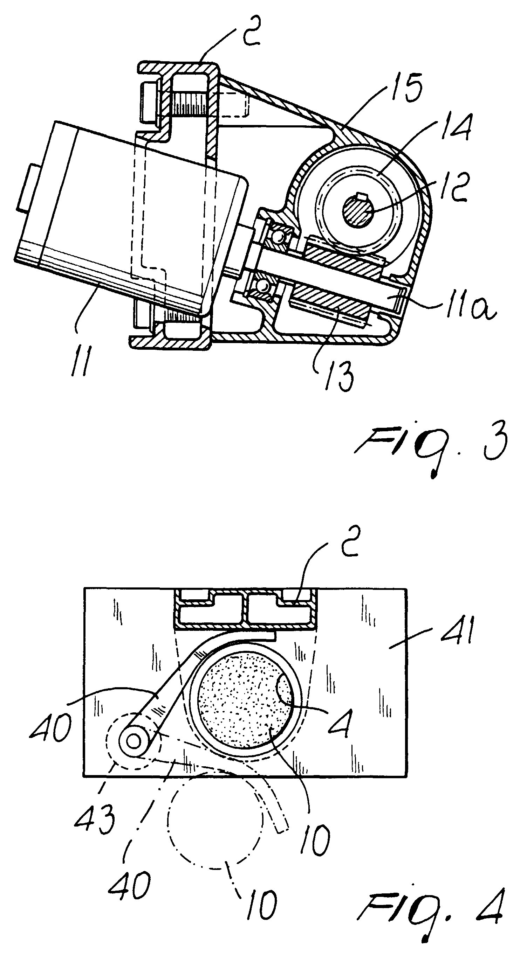

Figure 4 is a sectional view of Figure 1, taken along the line IV-IV;
Figures 5 and 6 are views of two operating steps of the assembly according to the invention during the preparation of a coffee of the fresh-brew type;
Figures 7 and 8 are schematic and partially sectional lateral elevation views of the working assembly during two steps of the preparation of one type of coffee;
Figure 9 is a schematic and partially sectional front elevation view of the working assembly during a step of the preparation of espresso coffee.

With reference to the above figures, the working assembly according to the invention, generally designated by the reference numeral 1, comprises a structure 2 which can be simply constituted by a plate which is optionally internally hollow and supports a central infusion block 3 in which there is an infusion chamber 4 which is substantially cylindrical, has a vertical axis and is open at its ends.

The working assembly also comprises two mutually opposite pistons, respectively an upper piston 5 and a lower piston 6, which are arranged coaxially to the infusion chamber 4; each piston faces one of the two bases of the infusion chamber 4.

The pistons 5 and 6 can be inserted at least partially in the infusion chamber 4, and there are means for actuating the pistons along their axis in order to open or close the infusion chamber 4 and/or press the infusion material 10 introduced in the infusion chamber 4 and/or in order to extract the residue of the infusion material 10 from the infusion chamber 4 at the end of the infusion process, as will become apparent hereinafter.

Conveniently, the pistons 5 and 6, together with the corresponding actuation means, are identical one another and are arranged symmetrically with respect to each other with respect to a horizontal plane which is perpendicular to the axis of the infusion chamber 4, so as to reduce the differentiation of the components required to provide the working assembly according to the invention and accordingly reduce its overall production costs.

More particularly, the upper piston 5 is actuated, along its axis that coincides with the axis of the infusion chamber 4, by means of an electric motor 11 which is supported by the structure 2 and is connected to a shaft 12 by means of a reduction unit.

Said reduction unit comprises a worm screw 13 which is keyed onto the shaft 11a of the electric motor 11. The worm screw 13 meshes with a helical gear 14 which is keyed at the end of the shaft 12 whose axis coincides with the axis of the piston 5.

The shaft 12 is supported by a box-like body 15 which is rigidly fixed to the structure 2 and supports the shaft 12, so that it can rotate about its own axis, by means of a bearing 16. The shaft 12 is prevented from performing a translatory motion along its axis by two mutually opposite shoulders 17a and 17b which engage the axial ends of the bearing 16.

The shaft 12 is externally threaded and engages a female thread 18, which is formed in a block 19 which is rigidly fixed at the upper end of a first hollow shaft 20, which is in turn fixed, with its lower end, to the piston 5.

The first hollow shaft 20 is inserted coaxially in a second hollow shaft 21 and can slide axially with respect to it.

The first hollow shaft 20 further has, on its curved surface, two tabs 22a and 22b which couple inside axial slots 23a and 23b which are formed on the internal surface of the second hollow shaft 21.

The second hollow shaft 21 is fixed, at its upper axial end, to the box-like body 15.

In this manner, the first hollow shaft 20 can only slide axially with respect to the second hollow shaft 21 and cannot rotate about its axis with respect to said second hollow shaft 21.

As a consequence of the engagement of the thread of the shaft 12 with the female thread 18 formed in the block 19 rigidly coupled to the first hollow shaft 20, a rotation of the shaft 12 about its own axis, caused by the actuation of the electric motor 11, causes a translatory motion of the first hollow shaft 20 with respect to the second hollow shaft 21 and therefore a translatory motion of the upper piston 5 along its axis.

The first hollow shaft 20 and the second hollow shaft 21 constitute, as a whole, a telescopic element which has a vertical axis and is fixed to the box-like body 15 by means of its upper end and to the upper piston 5 by means of its lower end.

Said telescopic element, besides allowing the translatory motion of the upper piston 5 along its axis, is also designed to adequately cover the shaft 12 so as to safely exclude the retention of dirt particles by said shaft 12.

The stroke of the block 19 along the shaft 12 is delimited by an upper stop spacer 24, which is fixed to said shaft 12 at the upper end of its thread, and by a lower stop spacer 25, which is connected to the shaft 12 at the lower end of the thread.

The lower piston 6 and the corresponding means that move it along its axis, which coincides with the axis of the infusion chamber 4, are substantially identical to the ones described with reference to the upper piston 5, and their description is therefore omitted. Merely for the sake of greater clarity of description, the motor that drives the lower piston 6 is designated by the reference numeral 30.

The motor 11 and the motor 30 are connected to control means which detect the intensity of the absorbed current and are adapted to interrupt the actuation of said electric motors 11 and 30 when a preset current absorption is reached in order to stop the corresponding piston in the stroke limit positions and in the position that corresponds to a preset pressing of the infusion material 10 introduced in the infusion chamber 4, as will become apparent hereinafter.

The upper piston 5 is provided with a feed hole 31 which can be connected, in a per se known manner, to a corresponding feed duct 32; said hole 31 is connected to a chamber 33 which is formed in the body of the piston 5 and is closed, on the side directed toward the lower piston 6, by a perforated plate 34 or mesh.

The lower piston 6 is provided with a discharge hole which can be connected, in a per se known manner, to a discharge duct 35; said hole is connected to a chamber which is similar to the chamber 32, is formed in the body of the lower piston 6 and is closed, on the side directed toward the upper piston 5, by another perforated plate which is similar to the perforated plate 33 and constitutes an infusion filter.

The upper piston 5, upon actuation of the electric motor 11, can move from an inactive position, in which it is extracted upward from the infusion chamber 4, to an active position, in which it is partially inserted in the infusion chamber 4 in order to cooperate with the lower piston 6 in pressing the infusion material 10 or in order to press, by means of an air cushion, on the infusion water fed into the infusion chamber 4, and viceversa.

The lower piston 6, through the actuation of the corresponding electric motor 30, can move from an inactive position, in which it is partially inserted in the infusion chamber 4 so as to close said infusion chamber 4 in a downward region, to a first active position, in which it cooperates with the upper piston 5 in order to press the infusion material 10, to a second active position, in which it is further inserted in the infusion chamber 4 until its top lies substantially at the level of the upper base of the infusion chamber 4 in order to extract, above the infusion chamber 4, the residue of the infusion material 10 at the end of the production of the infusion, and viceversa.

Above the central infusion block 3 there is a discharge arm 40 which can move on command, transversely to the axis of the pistons 5 and 6, in order to move laterally away the residue of the infusion material 10 which is expelled upward from the infusion chamber 4 by the lower piston 6.

More particularly, said discharge arm 40 can be hinged, at one of its ends, to a supporting plate 41 which is fixed to the structure 2 and is arranged on a horizontal plane at the upper base of the infusion chamber 4.

The arm 40 is rotatable about its own pivoting axis, for example by means of an electric motor 43 or other actuator, so as to slide above the upper end of the infusion chamber 4, in order to remove the residue of the infusion material 10 lifted by the lower piston 6.

Said arm 40 can be arranged so as to expel the residue of the infusion material to the left, to the right or frontally, according to the type of machine whereto the assembly is applied.

The operation of the working assembly according to the invention is as follows.

During the preparation of an espresso coffee, the lower piston 6 is initially in the inactive position, so as to close the infusion chamber 4 in a downward region, while the upper piston 5 is in the inactive position, i.e., it is spaced upward from the infusion chamber 4 so as to allow to introduce a preset amount of infusion material 10, for example coffee, into the infusion chamber 4 in a per se known manner.

After introducing the infusion material 10 in the infusion chamber 4, the electric motor 11 is actuated and, by turning the shaft 12, causes the gradual descent of the upper piston 5, which thus enters the infusion chamber 4 through the upper end, as shown in Figure 7.

When the upper piston 5 reaches the pressing of the infusion material or the lower stroke limit position, i.e., when the block 19 engages against the lower stop spacer 25, the absorption of current by the electric motor 11 exceeds the preset value and the electric motor 11 is therefore stopped.

When the upper piston 5 enters the infusion chamber 4, the electric motor 30 is actuated and lifts the lower piston 6 until the pressing of the infusion material 10 reaches a value which causes the electric motor 30 to absorb current above a preset value. When said preset value of the electric current absorption of the electric motor 30, which ensures the correct pressing of the infusion material 10 regardless of the amount of infusion material 10 introduced in the infusion chamber 4, is reached, the electric motor 30 is stopped, as shown in Figure 8. At this point, pressurized water is introduced in the infusion chamber 4 through the hole 31 of the upper piston 5 and, by passing through the infusion material 10, generates the infusion, which is dispensed through the discharge duct 35.

At the end of the dispensing of the infusion, the electric motors 30 and 11 are actuated sequentially (or in cascade), so as to lift the lower piston 6 and the upper piston 5.

The lifting of the piston 5 is interrupted when the block 19 engages against the upper stop spacer 24, since said engagement causes an increase in the absorption of current by the electric motor 11 which exceeds the preset value for stopping the electric motor 11.

The lifting of the lower piston 6 ceases when the lower piston 6 reaches the upper stroke limit position, again because the corresponding electric motor 30 exceeds a preset current absorption. In this upper stroke limit position, the top of the lower piston 6 lies at the upper end of the infusion chamber 4 and therefore the residue of the infusion material 10 is fully extracted from the infusion chamber 4, as shown in Figure 9. The actuation of the discharge arm 40 by the motor 43 or by another equivalent actuator removes said residue of the infusion material 10.

At this point, the electric motor 30 is actuated again so as to return the lower piston 6 to the inactive condition, i.e., so as to close the lower end of the infusion chamber 4 in order to allow to perform a new operating cycle.

It should be noted that the water for producing the infusion might be supplied through the lower piston 6 and discharged through the upper piston 5. In this case, the duct 35 becomes a feed duct and the duct 32 becomes a discharge duct.

If the working assembly is to be used to prepare a fresh-brew coffee, the infusion chamber 4 can be replaced, by simply replacing the central infusion block 3, with a chamber having different dimensions, and its operating cycle is as follows.

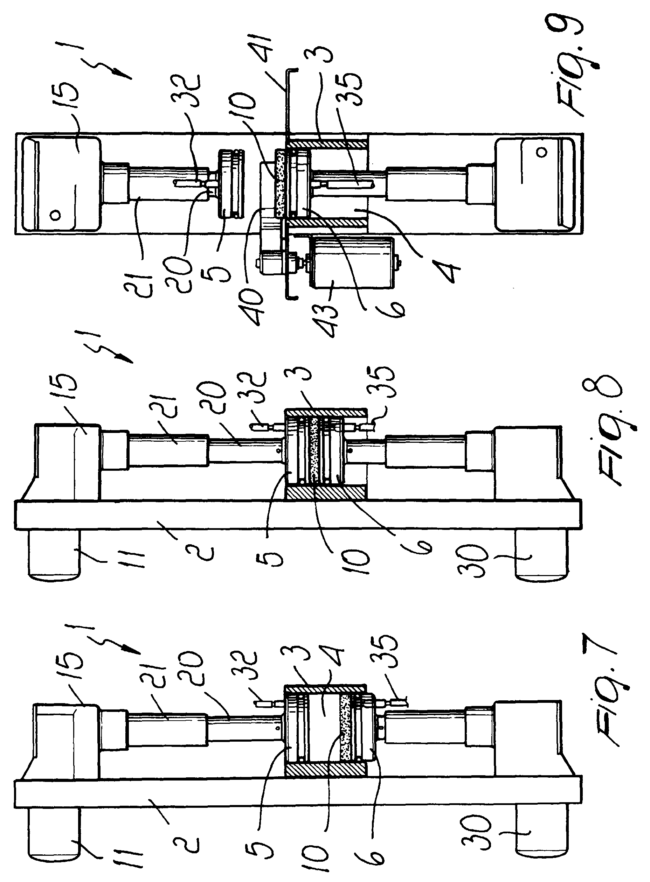

At the beginning of the operating cycle for coffee of the non-espresso type, the lower piston 6 is in the inactive position, i.e., it closes the lower end of the infusion chamber 4. The ground coffee is inserted in the infusion chamber 4 in a per se known manner, and water begins to be introduced in the infusion chamber through a nozzle 50, as shown in Figure 5. After introducing water, the upper piston 5 is lowered by means of the actuation of the corresponding electric motor 11 so as to press on the air cushion above the water introduced in the infusion chamber 4 and make it pass through the infusion material 10, producing the infusion, which is removed by means of the discharge duct 35, as shown in Figure 6. The infusion can be completed by lifting the lower piston 6 toward the upper piston 5 until the infusion material 10 lies against the upper piston 5, which has arrived at its lower stroke limit position.

At this point, the two pistons 5 and 6 are raised, as already described, so as to allow to remove the residue of infusion material 10.

In practice it has been observed that the working assembly according to the invention fully achieves the intended aim, since it is highly versatile in use and is thus usable to prepare several types of infusion such as coffee or the like, such as for example espresso coffee, Swiss-style espresso coffee, or fresh-brew coffee, simply by replacing a small number of components.

A further advantage of the working assembly according to the invention is that it is composed of an upper piston and a lower piston with corresponding actuation means which are mutually identical and thus allow to significantly reduce production costs.

The working assembly thus conceived is susceptible of numerous modifications and variations, all of which are within the scope of the inventive concept; all the details may also be replaced with other technically equivalent elements.

In practice, the materials employed, as well as the dimensions, may be any according to requirements and to the state of the art.

The disclosures in Italian Patent Application No. MI99A001282 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A working assembly for automatic machines for preparing infusions such as coffee or the like, characterized in that it comprises a structure (2) which supports a central infusion block (3), in which there is a substantially cylindrical infusion chamber (4) which has a vertical axis and is open at its ends, and two mutually opposite pistons, respectively an upper piston (5) and a lower piston (6), which are arranged coaxially to said infusion chamber (3), each piston (5,6) facing one of the ends of said infusion chamber and being at least partially insertable in said infusion chamber (3), means (11, 30) being provided for actuating said pistons (5, 6) along their axis in order to open or close said infusion chamber (4) and/or press the infusion material introduced in said infusion chamber (4) and/or extract the residue of the infusion material from said infusion chamber (4) at the end of the infusion process.

2. The working assembly according to claim 1, characterized in that said pistons (5, 6) and the corresponding actuation means (11, 30) are mutually identical and are arranged symmetrically with respect to each other relative to a horizontal plane which is perpendicular to the axis of said infusion chamber (4).

3. The working assembly according to claims 1 and 2, characterized in that the lower piston (6), which faces the lower end of said infusion chamber (4), can move on command so that its top reaches the upper base of said infusion chamber (4) in order to expel upwards, from said infusion chamber (4), the residue of the infusion material.

4. The working assembly according to one or more of the preceding claims, characterized in that said actuation means (11, 30) comprise, for each one of said pistons (5, 6), a gearmotor (13, 14) which is supported by said structure and actuates, so that it rotates about its axis, a threaded shaft (12) which has a vertical axis and engages a female thread (18) formed in a block (19) which can slide vertically with respect to said structure (2) and supports the corresponding piston (5, 6).

5. The working assembly according to one or more of the preceding claims, characterized in that said block (19) is associated with a telescopic element (20, 21) which is fixed to said structure (2) with one of its ends and supports the corresponding piston (5, 6) with its other end; said telescopic element (20, 21) accommodating said threaded shaft (12).

6. The working assembly according to one or more of the preceding claims, characterized in that said gearmotor comprises an electric motor (11, 30), means being provided for controlling the current absorbed by said electric motor (11, 30) in order to stop it when a preset absorption is reached, so as to stop the corresponding piston (5, 6) in the stroke limit positions and in the position that corresponds to a preset pressing of the material introduced in said infusion chamber (4).

7. The working assembly according to one or more of the preceding claims, characterized in that said lower piston (6) can move from an inactive position, in which it is partially inserted in said infusion chamber (4) in order to close it in a downward region, to a first active position, in which it is inserted at least partially in said infusion chamber (4) in order to cooperate with said upper piston (5) in pressing the infusion material introduced in said infusion chamber (4), to a second working position, in which it is further inserted in said infusion chamber (4) in order to move the infusion material so that the material exits from the upper end of said infusion chamber (4), and viceversa.

8. The working assembly according to one or more of the preceding claims, characterized in that said upper piston (5) can move on command from an inactive position, in which it is extracted upward from said infusion chamber (4), to an active position, in which it is at least partially inserted in said infusion chamber (4) in order to cooperate with said lower piston (6) in pressing the infusion material or press, by way of an air cushion, on the infusion water introduced in said infusion chamber (4), and viceversa.

9. The working assembly according to one or more of the preceding claims, characterized in that each one of said pistons (5,6) has a feed or discharge hole (31) which can be connected to a corresponding feed or discharge duct (35), said hole (31) being connected to a chamber (33) which is formed in the body of the corresponding piston (5, 6) and is closed, on the side directed toward the opposite piston (5, 6), by a mesh or filter (34).

10. The working assembly according to one or more of the preceding claims, characterized in that it comprises a discharge arm (40) which is arranged above said infusion block (3) and can move transversely to the axis of said pistons (5, 6) in order to move laterally away the infusion residue expelled upwards from said infusion chamber (4) by said lower piston (6).
